# EUROPEAN PATENT APPLICATION

(11) **EP 3 587 466 A1**
(43) Date of publication of application: **01.01.2020**
(21) Application number: 18757363.9
(22) Date of filing: 19.02.2018
(51) Int. Cl.: C08G 18/66, A43B 13/04, A43B 17/00, A43B 17/14, A43B 21/20, C08G 18/10, C08G 18/22, C08G 18/75, C08G 101/00

(54) **FOAMED POLYURETHANE ELASTOMER RAW MATERIAL, FOAMED POLYURETHANE ELASTOMER, AND PRODUCTION METHOD FOR FOAMED POLYURETHANE ELASTOMER**

(30) Priority: 22.02.2017 JP 2017031439
(71) Applicant: Mitsui Chemicals, Inc., Minato-ku Tokyo 105-7122 (JP)
(72) Inventor: AOKI, Wataru, Sodegaura-shi Chiba 299-0265 (JP); HASEGAWA, Daisuke, Sodegaura-shi Chiba 299-0265 (JP); MURATA, Naohiro, Sodegaura-shi Chiba 299-0265 (JP); KAGEOKA, Masakazu, Sodegaura-shi Chiba 299-0265 (JP); MORITA, Hirofumi, Sodegaura-shi Chiba 299-0265 (JP); YAMASAKI, Satoshi, Sodegaura-shi Chiba 299-0265 (JP)
(74) Representative: Hoffmann Eitle
(86) International application number: PCT/JP2018/005701
(87) International publication number: WO 2018/155372

(57) **Abstract**

A polyurethane elastomer foam material includes a polyisocyanate component (A) and a polyol component (B), wherein the polyisocyanate component (A) contains a prepolymer of 1,4-bis(isocyanatomethyl)cyclohexane (A1) and polyetherdiol (A2) having a straight chain oxyalkylene group with carbon atoms of 3 to 4 as a main chain, and the polyol component (B) contains macropolyol (B1) containing 90 mass% or more of polyetherdiol having a straight chain oxyalkylene group with carbon atoms of 3 to 4 as a main chain, and alkanepolyol (B2) having a straight chain or branched alkylene group with carbon atoms of 2 to 6.

## Description

### TECHNICAL FIELD

The present invention relates to a polyurethane elastomer foam material, a polyurethane elastomer foam (i.e., foam of the polyurethane elastomer foam material), and a method for producing polyurethane elastomer foam for producing the polyurethane elastomer foam.

### BACKGROUND ART

Conventionally, a polyurethane elastomer foam produced by stirring a urethane-forming composition while introducing inert gas to allow it to foam and cure has been known, the urethane-forming composition containing an isocyanate group-terminated prepolymer (A) and polyol (B): the isocyanate group-terminaed prepolymer (A) is produced by allowing polytetramethylene ether glycol (A1) to react with diphenylmethane diisocyanate (A2), and has an isocyanate content of 5 to 20 mass%, and the polyol (B) is composed of polytetramethylene ether glycol (B1) having a number average molecular weight of 500 to 5,000, a polyoxypropylene polyol (B2) having an average functional group of 3 to 8 and a number average molecular weight of 500 to 5,000, a low molecular diol (B3) having a molecular weight of 200 or less, and water (for example, see Patent Document 1 below).

### Citation List

### Patent Document

Patent Document 1: Japanese Unexamined Patent Publication No. 2011-38005

### SUMMARY OF THE INVENTION

### PROBLEM TO BE SOLVED BY THE INVENTION

A lower compression set and a higher flex cracking are sometimes demanded for a polyurethane elastomer foam such as the one described in the above-described Patent Document 1.

Thus, an object of the present invention is to provide a polyurethane elastomer foam material that allows for production of a polyurethane elastomer foam with which both reduction in compression set and improvement in flex cracking are achieved, a polyurethane elastomer foam, i.e., a foam of the polyurethane elastomer foam material, and a method for producing a polyurethane elastomer foam for producing the polyurethane elastomer foam.

### MEANS FOR SOLVING THE PROBLEM

[1] The present invention includes a polyurethane elastomer foam material including a polyisocyanate component (A) and a polyol component (B), wherein the polyisocyanate component (A) contains a prepolymer of 1,4-bis(isocyanatomethyl)cyclohexane (A1) and polyetherdiol (A2) having a straight chain oxyalkylene group with carbon atoms of 3 to 4 as a main chain, and the polyol component (B) contains macropolyol (B1) containing 90 mass% or more of polyetherdiol having a straight chain oxyalkylene group with carbon atoms of 3 to 4 as a main chain, and alkanepolyol (B2) having a straight chain or branched alkylene group with carbon atoms of 2 to 6.
[2] The present invention includes the polyurethane elastomer foam material of the above-described [1], wherein the macropolyol (B1) has a number average molecular weight of 400 or more and 10000 or less, and the macropolyol (B1) contains a first polyetherdiol (B1-1) having a first number average molecular weight and a second polyetherdiol (B1-2) having a second number average molecular weight, the second number average molecular weight being different from the first number average molecular weight by 1000 or more.
[3] The present invention includes the polyurethane elastomer foam material of the above-described [1] or [2], wherein the polyol component (B) contains a plurality of types of the alkanepolyols (B2).
[4] The present invention includes the polyurethane elastomer foam material of the above-described [3], wherein the polyol component (B) contains the alkanepolyol (B2) having a straight chain.
[5] The present invention includes the polyurethane elastomer foam material of the above-described [3] or [4], wherein in a total amount of the plurality of types of alkanepolyols (B2), 45 mol% or more and 95 mol% or less of the alkanepolyol (B2) having carbon atoms of 4 is contained.
[6] The present invention includes the polyurethane elastomer foam material of any one of the above-described [3] to [5], wherein the polyol component (B) contains the alkanepolyol (B2) having carbon atoms of 3.
[7] The present invention includes a foam of the polyurethane elastomer foam material of any one of the above-described [1] to [6].
[8] The present invention includes the polyurethane elastomer foam of the above-described [7], wherein the polyurethane elastomer foam is a material for a midsole of shoes.
[9] The present invention includes a method for producing a polyurethane elastomer foam for producing the polyurethane elastomer foam described in [7] or [8] above, the method including the steps of: a preparation step, in which the polyurethane elastomer foam material of any one of the above-described [1] to [6] is prepared, and a foaming step, in which the polyurethane elastomer foam material is foamed.
[10] The present invention includes the method for producing polyurethane elastomer foam of the above-described [9], wherein in the foaming step, the polyurethane elastomer foam material is foamed in the presence of a metal catalyst containing bismuth and a metal catalyst containing zinc.

### Effects of the Invention

With the polyurethane elastomer foam material of the present invention, a polyurethane elastomer foam achieving both decreased compression set and improved flex cracking can be produced.

### BRIEF DESCRIPTION OF THE DRAWINGS

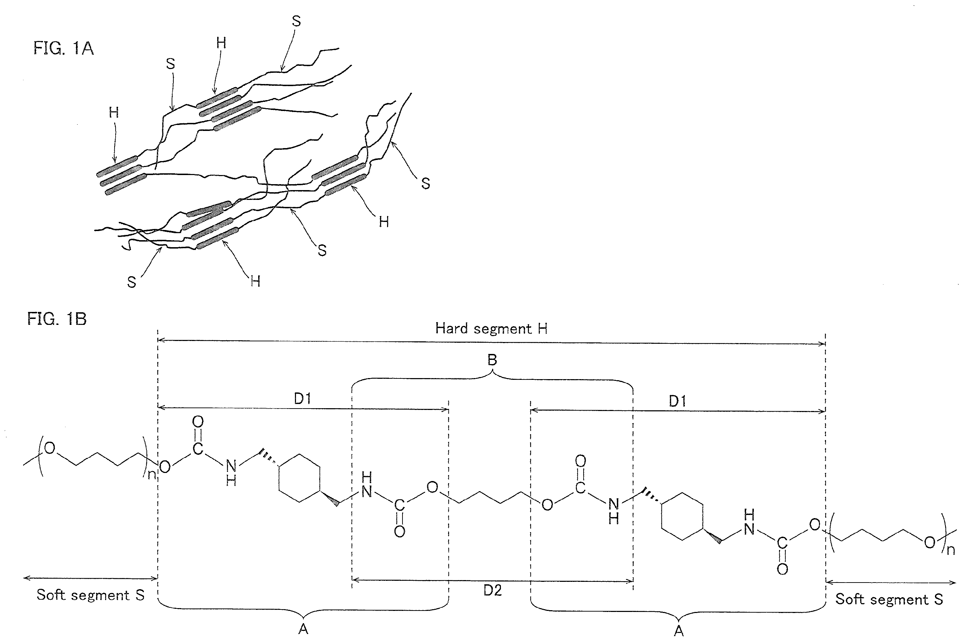

[FIG. 1] FIG. 1 is a figure for illustrating the structure of the polyurethane elastomer foam, FIG. 1A illustrating a higher order structure of polyurethane resin, and FIG. 1B illustrating a chemical structure of the hard segment shown in FIG. 1A.

### Description of the embodiments

The polyurethane elastomer foam material of the present invention is a polyurethane elastomer foam -use composition for producing a polyurethane elastomer foam, and contains a polyisocyanate component (A) and a polyol component (B).

The polyurethane elastomer foam material can be prepared as, for example, one component polyurethane elastomer foam material in which the polyisocyanate component (A) and polyol component (B) are made into one component, and for example, it can be prepared as a two-component polyurethane elastomer foam material containing a first component containing polyisocyanate component (A) and a second component containing polyol component (B).

The polyisocyanate component (A) includes a prepolymer of 1,4-bis(isocyanatomethyl)cyclohexane (A1) and polyetherdiol (A2).

1,4-bis(isocyanatomethyl)cyclohexane (A1) is prepared in accordance with, for example, WO2009/051114, and Japanese Unexamined Patent Publication No. 2011-140618.

1,4-bis(isocyanatomethyl)cyclohexane includes geometric isomers of cis-1,4-bis(isocyanatomethyl)cyclohexane (in the following, referred to as cis isomer) and trans-1,4-bis(isocyanatomethyl)cyclohexane (in the following, referred to as trans isomer). 1,4-bis(isocyanatomethyl)cyclohexane preferably contains a large amount of trans isomer more than cis isomer (in the following, referred to as a high trans isomer content).

The high trans isomer content 1,4-bis(isocyanatomethyl)cyclohexane contains trans isomer of, for example, 50 mol% or more, preferably 75 mol% or more, more preferably 80 mol% or more, even more preferably 85 mol% or more, and for example, 96 mol% or less, preferably 93 mol% or less. In the high trans isomer 1,4-bis(isocyanatomethyl)cyclohexane, the amount of the cis isomer is the remaining portion other than the trans isomer.

1,4-bis(isocyanatomethyl)cyclohexane (A1) is preferably the high trans isomer 1,4-bis(isocyanatomethyl)cyclohexane.

The polyetherdiol (A2) has a straight chain oxyalkylene group with carbon atoms of 3 to 4 as a main chain.

Examples of the polyetherdiol (A2) include, to be specific, polytetramethylene ether glycol (also called: poly (1,4-butanediol)) and polytrimethylene ether glycol (also called: poly (1,3-propanediol)).

The polyetherdiol (A2) has a number average molecular weight of, for example, 400 or more, preferably 800 or more, and for example, 10000 or less, preferably 5000 or less.

The number average molecular weight can be measured by gel permeation chromatography (GPC) analysis (polyethylene glycol based) (the same applies in the following).

The polyetherdiol (A2) has an average hydroxyl number of, for example, 12 mgKOH/g or more, preferably 25 mgKOH/g or more, and for example, 270 mgKOH/g or less, preferably 135 mgKOH/g or less.

The average hydroxyl number can be measured in accordance with JIS K1557-1: 2007 (the same applies in the following).

With the prepolymer containing a region derived from polyetherdiol (A2), based on the main chain (straight chain) of the polyetherdiol (A2), crystallinity of the soft segment of the polyurethane elastomer foam can be improved, and various mechanical properties desired for polyurethane elastomer foam as industrial products can be satisfied.

To prepare the prepolymer, polyisocyanate (1,4-bis(isocyanatomethyl)cyclohexane (A1), and as necessary, other polyisocyanate to be described later (for example, 1,3-bis(isocyanatomethyl)cyclohexane), and polyetherdiol (A2) are mixed so that the isocyanate index (ratio of the isocyanate group concentration of polyisocyanate (NCO concentration) relative to the hydroxyl group concentration of the polyetherdiol (A2) multiplied by 100, NCO concentration/hydroxyl group concentration × 100) is larger than, for example, 100, preferably 105 or more, and for example, 600 or less, preferably 450 or less, and they are allowed to react until a predetermined isocyanate group content is reached.

The reaction temperature is, for example, 50°C or more, and for example, 120°C or less, preferably 100°C or less.

The reaction time is, for example, 0.5 hours or more, preferably 1 hour or more, and for example, 15 hours or less, preferably 10 hours or less.

In this reaction, as necessary, the urethane-forming catalyst to be described later can also be added.

The urethane-forming catalyst is blended in an amount of, relative to a total amount of the polyisocyanate and polyetherdiol (A2), based on mass, for example, 1 ppm or more, and for example, 500 ppm or less, preferably 100 ppm or less, more preferably 20 ppm or less.

After the above-described reaction, as necessary, using a known distillation method, remaining monomers (to be specific, unreacted polyisocyanate) are removed.

The above-described prepolymer having an isocyanate group at molecular terminal can be produced in this manner.

The isocyanate group content (isocyanate group content) of the prepolymer is determined by di-n-butylamine titration in accordance with the isocyanate group content test described in JIS K7301, and for example, 3 mass% or more, preferably 5 mass% or more, and for example, 12 mass% or less, preferably 8 mass% or less.

The ratio of the prepolymer in the polyisocyanate component (A) is, for example, 70 mass% or more, preferably 80 mass% or more, and for example, 100 mass% or less, preferably 95 mass% or less.

The polyisocyanate component (A) contains preferably 1,4-bis(isocyanatomethyl)cyclohexane (remaining monomer that remains after synthesis of the above-described prepolymer). Derivatives of 1,4-bis(isocyanatomethyl)cyclohexane (for example, isocyanurate-modified product, iminooxadiazinedione-modified product, allophanate-modified product, polyol-modified product, biuret-modified product, urea-modified product, oxadiazinetrione-modified product, carbodiimide-modified product, uretdione-modified product, uretonimine-modified product, etc.) can be contained as 1,4-bis(isocyanatomethyl)cyclohexane.

The 1,4-bis(isocyanatomethyl)cyclohexane content in the polyisocyanate component (A) is, for example, 5 mass% or more, preferably 10 mass% or more, and for example, 30 mass% or less, preferably 20 mass% or less.

When the 1,4-bis(isocyanatomethyl)cyclohexane content in the polyisocyanate component (A) is within the above-described lower limit or more and the above-described upper limit or less, the hard segment content (hard segment concentration) in the polyurethane elastomer foam can be increased, and the polyurethane elastomer foam can be set to a desired hardness.

The polyisocyanate component (A) may contain, as necessary, other polyisocyanates.

Examples of the other polyisocyanate include aliphatic polyisocyanate including alicyclic polyisocyanate, aromatic polyisocyanate, araliphatic polyisocyanate, the above-described derivatives thereof, and prepolymers of these other polyisocyanates and polyetherdiol (A2) (for example, prepolymer of 1,3-bis(isocyanatomethyl)cyclohexane and polyetherdiol (A2)).

Examples of the aliphatic polyisocyanate include aliphatic diisocyanates such as pentamethylene diisocyanate (PDI) and hexamethylene diisocyanate (HDI).

Examples of the alicyclic polyisocyanate include alicyclic diisocyanates such as 1,3-bis(isocyanatomethyl)cyclohexane, isophorone diisocyanate (IPDI), 4,4'-, 2,4'- or 2,2'-dicyclohexylmethanediisocyanate or a mixture thereof (H₁₂MDI), 2,5-or 2,6-diisocyanatomethylbicyclo[2,2,1]-heptane (NBDI).

Examples of the aromatic polyisocyanate include aromatic diisocyanate such as 2,4-tolylene diisocyanate and 2,6-tolylene diisocyanate, and mixtures of isomers of these tolylene diisocyanate (TDI), 4,4'-diphenylmethane diisocyanate, 2,4'-diphenylmethane diisocyanate and 2,2'-diphenylmethane diisocyanate, and mixture of any isomers of these diphenylmethane diisocyanates (MDI), toluidinediisocyanate (TODI), paraphenylenediisocyanate (PPDI), and naphthalenediisocyanate (NDI).

Examples of the araliphatic polyisocyanate include araliphatic diisocyanates such as 1,3- or 1,4-xylylenediisocyanate or a mixture thereof (XDI), 1,3- or 1,4-tetramethylxylylene diisocyanate or a mixture thereof (TMXDI).

The other polyisocyanate content in the polyisocyanate component (A) is, for example, 0 mass% or more, and for example, 50 mass% or less, preferably 25 mass% or less.

For the prepolymer in the polyisocyanate component (A), preferably, the polyisocyanate component (A) contains only the prepolymer of 1,4-bis(isocyanatomethyl)cyclohexane (A1) and polyetherdiol (A2).

The polyol component (B) contains macropolyol (B1) and alkanepolyol (B2). Preferably, the polyol component (B) contains only macropolyol (B1) and alkanepolyol (B2).

The macropolyol (B1) is a compound having two or more hydroxyl groups and has a number average molecular weight of 400 or more and 10000 or less. The macropolyol (B1) has a number average molecular weight of preferably 800 or more. The macropolyol (B1) has a number average molecular weight of preferably 5000 or less.

The macropolyol (B1) has an average hydroxyl number of, for example, 12 mgKOH/g or more, preferably 25 mgKOH/g or more, and for example, 270 mgKOH/g or less, preferably 120 mgKOH/g or less.

The macropolyol (B1) content in the polyol component (B) is, for example, 50 mass% or more, preferably 60 mass% or more, and for example, 80 mass% or less, preferably 70 mass% or less.

The macropolyol (B1) contains polyetherdiol having a straight chain oxyalkylene group with carbon atoms of 3 to 4 as the main chain of, for example, 90 mass% or more, preferably 100 mass%.

When the macropolyol (B1) contains polyetherdiol of the above-described lower limit or more, based on the main chain (straight chain), crystallinity of the soft segment of the polyurethane elastomer foam can be improved, and various mechanical properties desired for polyurethane elastomer foam as industrial products can be satisfied.

Examples of the polyetherdiol include polyetherdiol of the above-described polyetherdiol (A2).

The macropolyol (B1) can contain a plurality of types of polyetherdiol having different number average molecular weights from each other. Preferably, the macropolyol (B1) contains only a plurality of types of polyetherdiol having different number average molecular weights from each other.

When the macropolyol (B1) contains a plurality of types of polyetherdiols, based on the differences in their number average molecular weights, suitable crystallinity of the soft segment of the polyurethane elastomer foam can be ensured. Therefore, decrease in compression set and improvement in flex cracking of the polyurethane elastomer foam can be both achieved.

When the macropolyol (B1) contains a plurality of types of polyetherdiol, preferably, the number of the carbon atoms of the straight chain oxyalkylene groups is the same.

With the macropolyol (B1) containing the plurality of types of polyetherdiol having the same number of carbon atoms of the straight chain oxyalkylene group, crystallinity of the soft segment of the polyurethane elastomer foam can be improved, and compression set of the polyurethane elastomer foam can be decreased.

To be specific, the macropolyol (B1) can contain a first polyetherdiol (B1-1) and a second polyetherdiol (B1-2). The first polyetherdiol (B1-1) has a first number average molecular weight. The second polyetherdiol (B1-2) has a second number average molecular weight, which is different from the first number average molecular weight.

The difference between the first number average molecular weight and the second number average molecular weight is, for example, 1000 or more, preferably 1500 or more, and for example, 2500 or less.

When the difference between the first number average molecular weight and the second number average molecular weight is the above-described lower limit or more and the above-described upper limit or less, based on the difference between the first number average molecular weight and the second number average molecular weight, suitable crystallinity of the soft segment of the polyurethane elastomer foam can be ensured.

The macropolyol (B1) can contain, in addition to the above-described polyetherdiol, other macropolyols.

Examples of the other macropolyol include polyetherpolyol other than the above-described polyetherdiol (for example, polyoxyalkylene polyol such as polyethylene glycol, polypropylene glycol (also called: poly (1,2-propanediol))), polyester polyol, polycarbonate polyol, polyurethane polyol, epoxy polyol, vegetable oil polyol, polyolefin polyol, acrylic polyol, silicone polyol, fluorine polyol, and vinyl monomer-modified polyol.

The other macropolyol content in the macropolyol (B1) is the remaining portion excluding polyetherdiol from a total of the macropolyol (B1), and for example, it is less than 10 mass%.

The alkanepolyol (B2) has a straight chain or branched alkylene group with carbon atoms of 2 to 6, and two or more hydroxyl groups.

The polyol component (B) containing the alkanepolyol (B2) with a straight chain or branched alkylene group with carbon atoms of 2 to 6 allows for control of the aggregation of the hard segment of the polyurethane elastomer foam, and decrease in compression set and improvement in flex cracking of the polyurethane elastomer foam can be both achieved.

Examples of the alkanepolyol (B2) include straight chain alkane diols such as ethylene glycol (also called: ethanediol), 1,3-propanediol, 1,4-butanediol, 1,5-pentanediol, and 1,6-hexanediol; branched alkane diols such as propylene glycol (also called: 1,2-propanediol), 1,3-butanediol, 1,2-butanediol, neopentyl glycol (also called: 2,2-dimethyl-1,3-propanediol), and 3-methyl-1,5-pentanediol; alkanetriols such as glycerine (also called: 1,2,3-propane triol), and trimethylolpropane (also called: 1,1,1-tris (hydroxymethyl) propane); alkanetetraol such as pentaerythritol (also called: tetramethylolmethane); alkanepentaol such as xylitol (also called: 1,2,3,4,5-pentahydroxypentane); and alkanehexaol such as sorbitol, mannitol, allitol, iditol, dulcitol, and altritol.

The alkanepolyol (B2) content in the polyol component (B) is, for example, 20 mass% or more, preferably 30 mass% or more, and for example, 50 mass% or less, preferably 45 mass% or less.

The alkanepolyol (B2) is blended by parts by mass of, relative to 100 parts by mass of macropolyol (B1), for example, 25 parts by mass or more, preferably 30 parts by mass or more, and for example, 70 parts by mass or less, preferably 100 parts by mass or less.

The alkanepolyol (B2) is blended in an amount of, relative to a total parts of the macropolyol (B1) and polyetherdiol (A2), for example, 2.0 mass% or more, preferably 3.0 mass% or more, and for example, 7.0 mass% or less, preferably 5.0 mass% or less.

The alkanepolyol (B2) is blended by parts by mass of, relative to 100 parts by mass of the polyisocyanate component (A) of, for example, 1.0 part by mass or more, preferably 2.5 parts by mass or more, and for example, 5.0 parts by mass or less, preferably 3.5 parts by mass or less.

The polyol component (B) may contain a single type of the alkanepolyol (B2) as the alkanepolyol (B2). Preferably, the polyol component (B) contains a plurality of types of alkanepolyol (B2) as the alkanepolyol (B2).

With the polyol component (B) containing a plurality of types of the alkanepolyol (B2), as described later, cohesive force of the hard segment of the polyurethane elastomer foam can be reduced, and flex cracking of the polyurethane elastomer foam can be improved.

The polyol component (B) preferably contains the straight chain alkanepolyol (B2). More preferably, the polyol component (B) contains, as the alkanepolyol (B2), only the straight chain alkanepolyol (B2). The straight chain alkanepolyol (B2) is preferably straight chain alkane diol.

The polyol component (B) containing the straight chain alkanepolyol (B2) allows for ensuring of aggregation in the hard segment of the polyurethane elastomer foam, and compression set of the polyurethane elastomer foam can be decreased, as described later.

Preferably, the polyol component (B) contains alkanepolyol (B2) having carbon atoms of 3 and alkanepolyol (B2) having carbon atoms of 4. More preferably, the polyol component (B) contains alkane diol having carbon atoms of 3 and alkane diol having carbon atoms of 4. To be more specific, the polyol component (B) contains 1,3-propanediol and 1,4-butanediol.

The polyol component (B) containing 1,3-propanediol and 1,4-butanediol allows for ensuring of aggregation of the hard segment of the polyurethane elastomer foam, and its cohesive force can be suitably decreased, and decrease in compression set and improvement in flex cracking of the polyurethane elastomer foam can be both achieved.

In a total amount of the plurality of types of alkanepolyol (B2) (that is, in alkanepolyol (B2)), the alkanepolyol (B2) having carbon atoms of 4 is contained by, for example, 15 mol% or more, preferably 45 mol% or more, more preferably 50 mol% or more, and for example, 99 mol% or less, preferably 95 mol% or less, more preferably 90 mol% or less.

When the mol concentration of the alkanepolyol (B2) having carbon atoms of 4 in a total amount of the plurality of types of alkanepolyol (B2) is the above-described lower limit or more and the above-described upper limit or less, aggregation in the hard segment of the polyurethane elastomer foam can be ensured, and its cohesive force can be suitably decreased, and decrease in compression set and improvement in flex cracking of the polyurethane elastomer foam can be both achieved even more.

The polyol component (B) can contain, as necessary, in addition to the above-described macropolyol (B1) and alkanepolyol (B2), other low molecular-weight active hydrogen group-containing compounds such as other low molecular-weight polyol and low molecular-weight amine.

Other low molecular-weight polyol is a compound having two or more hydroxyl groups, and a number average molecular weight of less than 400, and includes polyol other than the above-described macropolyol (B1) and alkanepolyol (B2), and for example, diols such as diethylene glycol, triethylene glycol, dipropylene glycol, and for example, triols such as triethanol amine and triisopropanolamine are used.

Examples of the other low molecular-weight amines include a compound having a number average molecular weight of less than 400, and for example, primary amines such as monoethanol amine and secondary amines such as diethanolamines are used.

The other low molecular-weight polyol content in the polyol component (B) is, for example, 0 mass% or more, and for example, 40 mass% or less, preferably 20 mass% or less.

The polyurethane elastomer foam of the present invention is described next.

The polyurethane elastomer foam is foam of the above-described polyurethane elastomer foam material, and is a foam having an apparent density (JIS K7222: 2005) of, for example, 100kg/m³ or more, and for example, 500kg/m³ or less, preferably 300kg/m³ or less. The polyurethane elastomer foam is distinguished from flexible polyurethane foam, semi-flexible polyurethane foam, and rigid polyurethane foam. The polyurethane elastomer foam material can be foamed by any method without particular limitation, but preferably, the method for producing polyurethane elastomer foam to be described later is used.

The polyurethane elastomer foam has a structure such that cells are dispersed in polyurethane resin of the reaction product of the polyisocyanate component (A) and the polyol component (B). The structure of the cells in the polyurethane elastomer foam is a closed cell structure, in which cells are closed (not open) or a semi-closed cell structure in which cells are partially opened.

The polyurethane resin has, as shown in FIG. 1A, a soft segment S and a hard segment H in one molecule. The soft segment S is a region (domain) composed of macropolyol including polyetherdiol. The hard segment H is a region (domain) composed of polyisocyanate including 1,4-bis(isocyanatomethyl)cyclohexane, alkanepolyol including alkane diol (and as necessary, other low molecular-weight active hydrogen group-containing compounds). Various mechanical properties of polyurethane resin are realized by aggregation of the hard segment H and crystallinity of the soft segment S.

In the polyurethane elastomer foam of the present invention, the soft segment S includes a region derived from polyetherdiol (A2) and a region derived from macropolyol (B1). Therefore, in the polyurethane elastomer foam of the present invention, based on the main chain (straight chain) of the polyetherdiol (A2) and the main chain (straight chain) of the macropolyol (B1), crystallinity of the soft segment S is improved. In this manner, the polyurethane elastomer foam has various mechanical properties that satisfy demands for industrial products.

Furthermore, because 1,4-bis(isocyanatomethyl)cyclohexane (A1) and polyetherdiol (A2) are used as prepolymers, homogenous crystallinity of the soft segment S can be ensured.

The hard segment H has a straight chain or branched alkylene group with carbon atoms of 2 to 6 based on the alkanepolyol (B2). Therefore, in the polyurethane elastomer foam of the present invention, aggregation of the hard segment H is adjusted. In this manner, decrease in compression set and improvement in flex cracking can be both achieved in the polyurethane elastomer foam.

To be more specific, when the polyisocyanate component (A) contains a prepolymer of trans isomer 1,4-bis(isocyanatomethyl)cyclohexane and polytetramethylene ether diol, and the polyol component (B) contains polytetramethylene ether diol and 1,4-butanediol, the polyurethane resin has the hard segment H including, as shown in FIG. 1B, region A (region A having a chemical structure of 1,4-dimethylcyclohexylene group interposed between two urethane bonds) and region B (region B having a chemical structure of a straight chain butylene group interposed between two urethane bonds).

The distance D1 of region A and the distance D2 of region B closely resemble each other.

Therefore, in the polyurethane elastomer foam, the cohesive force between the hard segment H is strong.

As described above, in the polyurethane elastomer foam, by strong aggregation between the hard segment H while suppressing excessive decrease in flex cracking, decrease in compression set can be achieved.

By using a plurality of types of alkanepolyols (preferably 1,3-propanediol is used at a specific ratio with 1,4-butanediol), the distance D2 of region B in the hard segment H can be suitably differentiated from the distance D1 of the region A.

As a result, with the polyurethane elastomer foam produced by using a plurality of types of alkanepolyols, cohesive force of the hard segment H can be suitably reduced, and compared with the polyurethane elastomer foam shown in FIG. 1, decrease in compression set and improvement in flex cracking can be both achieved even more.

The decrease in the compression set and improvement in flex cracking is usually trade-off relation (decrease in compression set causes reduction in flex cracking, and improvement in flex cracking causes increase in compression set).

In this regard, in the polyurethane elastomer foam of the present invention, decrease in compression set and improvement in flex cracking are both achieved: for example, the compression set (JIS K6262) of 20% or less, flex cracking (JIS K6260: 2010) of 70 × 10³ times or more, preferably compression set of 15% or less, and flex cracking of 110 × 10³ times or more, more preferably, compression set of 10% or less, and flex cracking 150 × 10³ times or more can be achieved.

The compression set of the polyurethane elastomer foam is, for example, 1% or more. The flex cracking of the polyurethane elastomer foam is, for example, 400 × 10³ times or less.

The polyurethane elastomer foam has an impact resilience (JIS K6400-3: 2012) of, for example, 50% or more, preferably 61% or more, and for example, 90% or less, preferably 75% or less.

The polyurethane elastomer foam has an Asker C hardness (JIS K7312-7: 1996) of, for example, 30 or more, preferably 35 or more, and for example, 60 or less, preferably 50 or less.

The polyurethane elastomer foam has a tensile strength (JIS K6400-5: 2012) of, for example, 0.5 MPa or more, preferably 1.0 MPa or more, and for example, 3.0 MPa or less, preferably 2.5 MPa or less.

The polyurethane elastomer foam has a elongation at break (JIS K6400-5: 2012) of, for example, 200% or more, preferably 250% or more, and for example, 700% or less, preferably 600% or less.

The polyurethane elastomer foam is used as a material for an industrial product selected from the group consisting of sole member for shoes such as shoes inner sole, outer sole, and midsole (portion between inner sole and outer sole); shock absorbers including shock absorber for shoes, shock absorber for automobiles, shock absorber for helmets, and shock absorber for grip tape; interior materials for automobiles; sports goods including shoes, helmet, grip tape, and bat (batting restitution material); headphone member; packing member for civil engineering work; padding material including packing material, pillow, mattress, sheet cushion, sealing material, and soundproof flooring material; apparel products including brassiere, brassiere pad, brassiere cup, and shoulder pads; bicycles and mobility members; shock absorber for robot; cushioning material for caregiving products, and electric and electronic products. The polyurethane elastomer foam is preferably used as a material for industrial products selected from the group consisting of shoes midsole, shock absorber, automobile interior material, and sports goods.

The method for producing a polyurethane elastomer foam in an embodiment of the present invention is described next.

The method for producing a polyurethane elastomer foam is a method for producing a polyurethane elastomer foam for producing the above-described polyurethane elastomer foam, and includes a preparation step and a foaming step.

In the preparation step, the above-described polyurethane elastomer foam material is prepared.

The method for preparing the polyurethane elastomer foam material is not particularly limited, and the polyurethane elastomer foam material can be made or purchased.

Then, in the foaming step, the above-described polyurethane elastomer foam material is allowed to foam.

To be specific, in the foaming step, first, the polyol component (B) is blended with a blowing agent, and they are mixed to prepare a resin premix.

For the blowing agent, those known blowing agents generally used for production of the polyurethane foam material are used. Examples of the blowing agent include water, and halogen-substituted aliphatic hydrocarbons such as trichlorofluoromethane, dichlorodifluoromethane, trichloroethane, trichloroethylene, tetrachloroethylene, methylene chloride, trichlorotrifluoroethane, dibromotetrafluoroethane, and carbon tetrachloride.

These blowing agents can be used singly, or can be used in combination of two or more.

For the blowing agent, preferably, water is used singly.

To the resin premix, as necessary, organic catalysts such as amine catalyst and imidazole catalyst (foam-forming and urethane-forming catalyst), foam stabilizers, and additives can be added.

Examples of the amine catalyst include tertiary amine compounds such as triethylamine, triethylenediamine, bis(dimethylaminoethyl) ether, N-methylmorphiline; and quaternary ammonium salt compounds such as tetraethyl hydroxyl ammonium.

Examples of the imidazole catalyst include imidazole compounds such as imidazole, 1,2-dimethyl imidazole, 2-ethyl-4-methyl imidazole, and 1-isobutyl-2-methyl imidazole.

For the foam stabilizer, known foam stabilizers generally used for production of the polyurethane foam material can be used. Examples of the foam stabilizer include SURFLON AF-5000 and SURFLON S-651 manufactured by AGC Seimi Chemical Co., Ltd.; L-568, L-580, L-590, L-598, L-600, L-620, L-635, L-638, L-650, L-680, L-682, SC-155, Y-10366, L-5309, L-5614, L-5617, L-5627, L-5639, L-5624, L-5690, L-5693, and L-5698 manufactured by Momentive; F-607, F-606, F-242T, F-114, and F-348 manufactured by Shin-Etsu Chemical Co., Ltd.; DC5598, DC5933, DC5609, DC5986, DC5950, DC2525, DC2585, DC6070, and DC3043 manufactured by Air Products and Chemicals, Inc.; and SZ-1919, SH-192, SH190, SZ-580, SRX280A, SZ-584, SF2904, SZ-5740M, SZ-1142, and SZ-1959 manufactured by Dow Corning Toray Co.,Ltd.

Examples of the additive include an antioxidant (for example, hindered phenol compound, organic phosphorus compound, thioether compound, hydroxylamine compound, etc.), ultraviolet absorber (for example, benzotriazole compound, formamidine compound, etc.), and light stabilizer (for example, hindered amine compound, etc.).

Then, in the foaming step, the polyisocyanate component (A) is blended to the resin premix, and they are mixed to prepare the foam mixture. At this time, the entire polyurethane elastomer foam material is blended to the foam mixture. To the foam mixture, preferably, a metal catalyst (urethane-forming catalyst) is blended.

Examples of the metal catalyst include a metal catalyst containing bismuth such as bismuth neodecanoate (III) and bismuth octylate (III); metal catalyst containing zinc such as zinc octylate, zinc diacetylacetonate, K-KAT XK-633 (manufactured by King Industries, Inc), and K-KAT XK-614 (manufactured by King Industries, Inc); metal catalyst containing tin such as inorganic tin compound (for example, tin acetate, tin octylate, etc.), organic tin compound (for example, dibutyltindilaurate, dibutyltinchloride, dimethyltindineodecanoate, dimethyltin dithioglycolate, etc.); metal catalyst containing lead such as lead octylate and lead naphthenate; metal catalyst containing nickel such as nickel naphthenate and nickel acetylacetonate; metal catalyst containing zirconium such as zirconium tetraacetyl acetonate; metal catalyst containing alkali metal such as potassium octylate, sodium octylate, potassium carbonate, and sodium carbonate; metal catalyst containing cobalt such as cobalt octylate and cobalt acetylacetonate; metal catalyst containing manganese such as manganese octoate and manganese acetylacetonate; and metal catalyst containing aluminum such as aluminum acetylacetonate. For the metal catalyst, preferably, the metal catalyst containing bismuth and the metal catalyst containing zinc are used in combination.

The metal catalyst is blended in an amount of, relative to 100 parts by mass of polyisocyanate component (A), for example, 0.5 parts by mass or more, preferably 1 part by mass or more, and for example, 10 parts by mass or less, preferably 5 parts by mass or less.

When the metal catalyst containing bismuth and the metal catalyst containing zinc are used in combination as the metal catalyst, the blending ratio of the metal catalyst containing bismuth to the metal catalyst containing zinc (parts by mass of metal catalyst containing bismuth blended/parts by mass of metal catalyst containing zinc blended) is, for example, 1/2 or more, preferably 3/4 or more, and for example, 2/1 or less, 4/3 or less.

Then, in the foaming step, the foam mixture is poured into a predetermined mold, and the foam mixture (polyurethane elastomer foam material) is allowed to foam. Preferably, in the foaming step, the polyurethane elastomer foam material is allowed to foam in the presence of the above-described metal catalyst. More preferably, in the foaming step, the polyurethane elastomer foam material is allowed to foam in the presence of the metal catalyst containing bismuth and metal catalyst containing zinc. By allowing the polyurethane elastomer foam material to foam in the presence of the metal catalyst containing bismuth and metal catalyst containing zinc, after allowing the polyurethane elastomer foam material to foam in a predetermined mold, the produced polyurethane elastomer foam can be demolded smoothly in a short period of time.

The above-described polyurethane elastomer foam can be produced in this manner.

### Examples

Next, the present invention is described based on Examples and Comparative Examples. However, the present invention is not limited to Examples below. The "parts" and "%" are based on mass unless otherwise specified. The specific numerical values of mixing ratio (content ratio), physical property value, and parameter used in the following can be replaced with upper limit values (numerical values defined with "or less" or "below") or lower limit values (numerical values defined with "or more" or "above") of corresponding numerical values in mixing ratio (content ratio), physical property value, and parameter described in **"DESCRIPTION OF EMBODIMENTS"** above.

### <Materials>

1. Polyisocyanate
   (1) 1,4-bis(isocyanatomethyl)cyclohexane (1,4-BIC, synthesized in accordance with Production Example 3 of WO2009/51114. Purity (measured with gas chromatography measurement) 99.9%, trans/cis ratio (based on mol) = 86/14)
   (2) 1,3-bis(isocyanatomethyl)cyclohexane (1,3-BIC, trade name: TAKENATE 600, manufactured by Mitsui Chemicals, Inc.)
2. Macropolyol
   2-1. Polyetherdiol having straight chain oxyalkylene group
      (1) PTG-1000 (polytetramethylene ether glycol, trade name: PTG-1000, number average molecular weight: 1000, average hydroxyl number: 111.9 mgKOH/g, manufactured by Hodogaya Chemical Co., LTD.)
      (2) PTG-2000 (polytetramethylene ether glycol, trade name: PTG-2000SN, number average molecular weight: 2000, average hydroxyl number: 56.2 mgKOH/g, manufactured by Hodogaya Chemical Co., LTD.)
      (3) PTG-3000 (polytetramethylene ether glycol, trade name: PTG-3000SN, number average molecular weight: 3000, average hydroxyl number: 38.0 mgKOH/g, manufactured by Hodogaya Chemical Co., LTD.)
      (4) Polypropanediol-1000 (polytrimethylene ether glycol, trade name: PO3GH1000, number average molecular weight: 1000, average hydroxyl value: 112.1 mgKOH/g, manufactured by WeylChem International GmbH)
      (5) Polypropanediol-2400 (polytrimethylene ether glycol, trade name: PO3GH2400, number average molecular weight: 2400, average hydroxyl value: 48 mgKOH/g, manufactured by WeylChem International GmbH)
   2-2. Polyetherdiol having branched oxyalkylene group
      (1) PPG#3000 (polyoxypropylene glycol, produced by addition polymerization of propylene oxide with dipropylene glycol using a phosphazenium compound as the catalyst, with the method described in Example 2 of Japanese patent no. 3905638. Number average molecular weight: 3000, average hydroxyl number: 37.5 mgKOH/g)
3. Alkanepolyol
   3-1. Straight chain alkane diol
      (1) 1,4-butanediol (manufactured by Mitsubishi Chemical Corporation.)
      (2) 1,3-propanediol (trade name: SUSTERRA propanediol, manufactured by DuPont.)
      (3) Ethylene glycol (manufactured by Wako Pure Chemical Industries, Ltd.)
      (4) 1,5-pentanediol (manufactured by Ube Industries, Ltd.)
      (5) 1,6-hexanediol (manufactured by Wako Pure Chemical Industries, Ltd.)
   3-2. Branched alkane diol
      (1) 1,2-propanediol (manufactured by Wako Pure Chemical Industries, Ltd.)
      (2) 1,3-butanediol (manufactured by Wako Pure Chemical Industries, Ltd.)
   3-3. Triol
      (1) Glycerine (manufactured by Wako Pure Chemical Industries, Ltd.)
      (2) TMP (1,1,1-tris (hydroxymethyl) propane, manufactured by Wako Pure Chemical Industries, Ltd.)
4. Urethane-forming catalyst
   4-1. Organic catalyst
      (1) Amine catalyst (triethylenediamine, trade name: DABCO-CRYSTALLINE, manufactured by Air Products and Chemicals, Inc.)
      (2) Imidazole catalyst (65 to 75% ethylene glycol solution of 1,2-dimethyl imidazole, trade name: TOYOCATDM-70, manufactured by Tosoh Corporation)
   4-2. Metal catalyst
      (1) Bismuth neodecanoate (bismuth neodecanoate (III), trade name: BiCAT8108, manufactured by The Shepherd Chemical Company Japan.)
      (2) Bismuth octoate (bismuth octylate (III), trade name: PUCAT25, manufactured by NIHON KAGAKU SANGYO CO.,LTD.)
      (3) Zinc catalyst (trade name: K-KAT XK-633, manufactured by KING Industries)
5. Foam stabilizer
   (1) SURFLON AF-5000 (manufactured by AGC Seimi Chemical Co., Ltd.)
6. Additive
   (1) Antioxidant (hindered phenol compound, trade name: IRGANOX 245, manufactured by BASF Japan)
   (2) Ultraviolet absorber (benzotriazole compound, trade name: TINUVIN 571, manufactured by BASF Japan)
   (3) Light stabilizer (hindered amine compound, trade name: ADK STAB LA-72, manufactured by ADEKA CORPORATION)

### <Examples and Comparative Examples>

### 1. Preparation of polyisocyanate component (A)

The polyisocyanate and macropolyol are introduced into a four-neck flask equipped with a mixer, thermometer, reflux pipe, and nitrogen inlet tube by parts by mass shown in Tables, and they are mixed in a nitrogen atmosphere at 80°C for 1 hour.

Thereafter, 10ppm of tin octylate (trade name: Stanoct, manufactured by API Corporation) diluted to 4 mass% in advance with diisononyladipate (manufactured by J-PLUS Co., Ltd.) was added relative to a total amount of the polyisocyanate and macropolyol (relative to 10000 parts by mass of a total amount of polyisocyanate and macropolyol, 0.10 parts by mass), and they were stirred and mixed under controlled temperature of 80°C under nitrogen flow.

In this manner, the polyisocyanate component (A) containing the isocyanate group-terminaed prepolymer was prepared.

The isocyanate group concentration of the produced polyisocyanate component (A) was measured under controlled temperature of 80°C. The isocyanate group content was determined by titration with di-n-butylamine in accordance with the isocyanate group content test described in JIS K7301. The results are shown in Tables.

### 2. Production of polyurethane elastomer foam

The polyol component (B) by parts by mass shown in Tables, 0.86 parts by mass of blowing agent (ion-exchange water), 0.5 parts by mass of foam stabilizer, 1.2 parts by mass of amine catalyst, 1.0 part by mass of imidazole catalyst, 0.5 parts by mass of antioxidant, 0.5 parts by mass of ultraviolet absorber, and 0.5 parts by mass of light stabilizer were stirred and mixed homogeneously, and the mixture was allowed to stand in an oven of 50°C for 1 hour, thereby preparing a resin premix.

Thereafter, the entire amount of the produced resin premix and 100 parts by mass of the polyisocyanate component (A) with its temperature controlled to 80°C, and parts by mass shown in Tables of the metal catalyst (23°C) were mixed and stirred with a hand-mixer (number of revolution 5000 rpm) for 10 seconds, thereby preparing a foam mixture.

Then, the produced foam mixture was transferred immediately after the production to a mold (SUS made, 210 × 300 × 10 mm) in an oven with its temperature controlled to 80°C in advance. The lid of the mold was closed, and fixed with a vise.

Thereafter, the mold was allowed to stand in an oven of 80°C for the time shown in the column of demoldability of Tables, thereby allowing the foam mixture to foam in the mold.

Thereafter, the polyurethane elastomer foam was removed from the mold (demolded), and allowed to cure in an oven of 60°C for one night. The polyurethane elastomer foam of Examples and Comparative Examples were produced in this manner. The produced polyurethane elastomer foam was evaluated by the evaluation method described later.

### <Evaluation method>

### (1) Appearance

The polyurethane elastomer foams of Examples and Comparative Examples were evaluated visually, and surface roughness was determined. "OK" shown in Tables show that the surface was smooth.

### (2) Apparent density

A measurement sample was taken out from the polyurethane elastomer foams of Examples and Comparative Examples, and apparent density of the measurement sample was measured in accordance with JIS K7222: 2005. The results are shown in Tables.

### (3) Impact resilience

A measurement sample of 10 cm × 10 cm × 1 cm was cut out from the polyurethane elastomer foams of Examples and Comparative Examples, and impact resilience of the measurement sample was measured in accordance with JIS K6400-3: 2012. The results are shown in Tables.

### (4) Asker C hardness

Asker C hardness of the polyurethane elastomer foams of Examples and Comparative Examples was measured in accordance with JIS K7312-7: 1996. The results are shown in Tables.

### (5) Tensile strength, elongation at break

A measurement sample was made using JIS-No.1 dumbbell from the polyurethane elastomer foams of Examples and Comparative Examples, and tensile strength and elongation at break of the measurement sample were measured in accordance with JIS K6400-5: 2012. The results are shown in Tables. (6) Compression set

A measurement sample having a disk shape with a diameter of 29 mm and a thickness of 10 mm was cut out from the polyurethane elastomer foams of Examples and Comparative Examples, and compression set of the measurement sample was measured under conditions of 50°C × 6 hours and 50% compression in accordance with JIS K6262. The results are shown in Tables.

### (7) Flex cracking

A measurement sample with 140 mm × 25 mm × 6.3 mm was taken out from the polyurethane elastomer foam s of Examples and Comparative Examples, and flex cracking of the measurement sample was measured in accordance with JIS K6260: 2010. The results are shown in Tables.

**[Table 1]**

| | | | Example 1 | Example 2 | Example 3 | Example 4 | Example 5 | Example 6 | Example 7 | Example 8 |
|---|---|---|---|---|---|---|---|---|---|---|
| Polyisocyanate component (A) | Prepolymer composition (parts by mass) | 1,4-BIC | 22.4 | 22.4 | 22.4 | 22.4 | 22.4 | 22.4 | 22.4 | 22.4 |
| | | 1,3-BIC | | | | | | | | |
| | | PTG-1000 | 12.7 | 12.7 | 12.7 | 12.7 | 12.7 | 12.7 | 12.7 | 12.7 |
| | | PTG-3000 | 64.9 | 64.9 | 64.9 | 64.9 | 64.9 | 64.9 | 64.9 | 64.9 |
| | Isocyanate group content (%) | | 6.8 | 6.8 | 6.8 | 6.8 | 6.8 | 6.8 | 6.8 | 6.8 |
| | Macropolyol (B1) (parts by mass) | PTG-1000 | 3.2 | 3.2 | 3.2 | 3.2 | 3.2 | 3.2 | 3.2 | 3.2 |
| | | PTG-2000 | | | | | | | | |
| | | PTG-3000 | 3.2 | 3.2 | 3.2 | 3.2 | 3.2 | 3.2 | 3.2 | 3.2 |
| | | PPG#3000 | | | | | | | | |
| | | Polypropanediol-1000 | | | | | | | | |
| | | Polypropanediol-2400 | | | | | | | | |
| | Macropolyol content in polyol component (mass%) | | 66 | 67 | 64 | 64 | 66 | 65 | 67 | 66 |
| | Alkanepolyol (B2) (parts by mass) | 1,4-Butanediol | 2.55 | 2.55 | 2.55 | 2.55 | 2.55 | 2.55 | 2.55 | 2.55 |
| Polyol component (B) | | 1,3-Propanediol | 0.7 | | | | | | | |
| | | Ethylene glycol | | 0.59 | | | | | | |
| | | 1,5-Pentanediol | | | 1 | | | | | |
| | | 1,6-Hexanediol | | | | 1.12 | | | | |
| | | 1,2-Propanediol | | | | | 0.7 | | | |
| | | 1,3-Butanediol | | | | | | 0.85 | | |
| | | Glycerine | | | | | | | 0.56 | |
| | | TMP | | | | | | | | 0.82 |
| | Mol concentration of 1,4-butanediol in alkanepolyol (mol%) | | 75 | 75 | 75 | 75 | 75 | 75 | 75 | 75 |
| | Alkanepolyol content in polyol component (mass%) | | 34 | 33 | 36 | 36 | 34 | 35 | 33 | 34 |
| Metal catalyst (parts by mass) | Bismuth neodecanoate BiCAT 8108 | | 1.6 | 1.6 | 1.6 | 1.6 | 1.6 | 1.6 | 1.6 | 1.6 |
| | Bismuth octoate PUCAT 25 | | 0.8 | 0.8 | 0.8 | 0.8 | 0.8 | 0.8 | 0.8 | 0.8 |
| | Zinc catalyst K-KAT XK-633 | | | | | | | | | |
| Evaluation | Demoldability (min) | | 20 | 20 | 25 | 25 | 20 | 20 | 25 | 25 |
| | Appearance | | OK | OK | OK | OK | OK | OK | OK | OK |
| | Apparent density (kg/m³) | | 245 | 248 | 249 | 250 | 255 | 251 | 245 | 255 |
| | Impact resilience (%) | | 67 | 65 | 65 | 64 | 65 | 65 | 64 | 62 |
| | Asker C hardness | | 40 | 39 | 42 | 41 | 38 | 40 | 42 | 40 |
| | Tensile strength(MPa) | | 1.2 | 1.2 | 1.1 | 1.2 | 1 | 1.2 | 1.2 | 1.1 |
| | Elongation at break(%) | | 330 | 340 | 330 | 350 | 290 | 330 | 270 | 280 |
| | Compression set (%) | | 9 | 9.1 | 10 | 11 | 15 | 14 | 13 | 14 |
| | Flex cracking (×10³ times) | | 200 or more | 150 | 200 or more | 170 | 200 or more | 200 or more | 110 | 120 |

**[Table 2]**

| | | | Example 9 | Example 10 | Example 11 | Example 12 | Example 13 | Example 14 | Example 15 | Example 16 |
|---|---|---|---|---|---|---|---|---|---|---|
| Polyisocyanate component (A) | Prepolymer composition (parts by mass) | 1,4-BIC | 22.4 | 22.4 | 22.4 | 22.4 | 22.4 | 22.4 | 22.4 | 22.4 |
| | | 1,3-BIC | | | | | | | | |
| | | PTG-1000 | 12.7 | 12.7 | 12.7 | 12.7 | 12.7 | 12.7 | 12.7 | 12.7 |
| | | PTG-3000 | 64.9 | 64.9 | 64.9 | 64.9 | 64.9 | 64.9 | 64.9 | 64.9 |
| | Isocyanate group content (%) | | 6.8 | 6.8 | 6.8 | 6.8 | 6.8 | 6.8 | 6.8 | 6.8 |
| | Macropolyol (B1) (parts by mass) | PTG-1000 | 3.2 | 3.2 | 3.2 | 3.2 | 3.2 | 3.2 | 3.2 | 3.2 |
| | | PTG-2000 | | | | | | | | |
| | | PTG-3000 | 3.2 | 3.2 | 3.2 | 3.2 | 3.2 | 3.2 | 3.2 | 3.2 |
| | | PPG#3000 | | | | | | | | |
| | | Polypropanediol-1000 | | | | | | | | |
| | | Polypropanediol-2400 | | | | | | | | |
| | Macropolyol content in polyol component | | 69 | 68 | 67 | 66 | 66 | 65 | 65 | 65 |
| | Alkanepolyol (B2) (parts by mass) | 1,4-Butanediol | | 0.65 | 1.67 | 2.18 | 2.9 | 3.1 | 3.3 | 3.4 |
| Polyol component (B) | | 1,3-Propanediol | 2.87 | 2.35 | 1.45 | 1.05 | 0.4 | 0.3 | 0.1 | |
| | | Ethylene glycol | | | | | | | | |
| | | 1,5-Pentanediol | | | | | | | | |
| | | 1,6-Hexanediol | | | | | | | | |
| | | 1,2-Propanediol | | | | | | | | |
| | | 1,3-Butanediol | | | | | | | | |
| | | Glycerine | | | | | | | | |
| | | TMP | | | | | | | | |
| | Mol concentration of 1,4-butanediol in alkanepolyol (mol%) | | 0 | 19 | 49 | 64 | 85.3 | 91 | 97 | 100 |
| | Alkanepolyol content in polyol component | | 31 | 32 | 33 | 34 | 34 | 35 | 35 | 35 |
| Metal catalyst (parts by mass) | Bismuth neodecanoate BiCAT 8108 | | 1.6 | 1.6 | 1.6 | 1.6 | 1.6 | 1.6 | 1.6 | 1.6 |
| | Bismuth octoate PUCAT 25 | | 0.8 | 0.8 | 0.8 | 0.8 | 0.8 | 0.8 | 0.8 | 0.8 |
| | Zinc catalyst K-KAT XK-633 | | | | | | | | | |
| Evaluation | Demoldability (min) | | 20 | 20 | 20 | 20 | 20 | 20 | 20 | 20 |
| | Appearance | | OK | OK | OK | OK | OK | OK | OK | OK |
| | Apparent density (kg/m³) | | 243 | 245 | 247 | 248 | 244 | 245 | 248 | 243 |
| | Impact resilience (%) | | 62 | 63 | 65 | 66 | 67 | 67 | 67 | 68 |
| | Asker C hardness | | 38 | 39 | 39 | 40 | 40 | 42 | 43 | 43 |
| | Tensile strength(MPa) | | 1.0 | 1.1 | 1.2 | 1.2 | 1.2 | 1.2 | 1.1 | 1.2 |
| | Elongation at break(%) | | 360 | 340 | 320 | 320 | 340 | 320 | 310 | 300 |
| | Compression set (%) | | 19 | 15 | 10.4 | 9.4 | 8.8 | 8.4 | 8.4 | 8 |
| | Flex cracking (×10³ times) | | 200 or more | 200 or more | 200 or more | 200 or more | 170 | 150 | 110 | 80 |

**[Table 3]**

| | | | Ex. 17 | Ex. 18 | Ex. 19 | Ex. 20 | Ex. 21 | Ex. 22 | Ex. 23 | Comp.Ex |
|---|---|---|---|---|---|---|---|---|---|---|
| Polyisocyanate component (A) | Prepolymer composition (parts by mass) | 1,4-BIC | 22.4 | 22.4 | 22.4 | 22.4 | 22.4 | 17.0 | 22.4 | 22.4 |
| | | 1,3-BIC | | | | | | 5.4 | | |
| | | PTG-1000 | 12.7 | 12.7 | 12.7 | 12.7 | 12.7 | 12.7 | 12.7 | 12.7 |
| | | PTG-3000 | 64.9 | 64.9 | 64.9 | 64.9 | 64.9 | 64.9 | 64.9 | 64.9 |
| | Isocyanate group content (%) | | 6.8 | 6.8 | 6.8 | 6.8 | 6.8 | 6.77 | 6.8 | 6.8 |
| | Macropolyol (B1) (parts by mass) | PTG-1000 | 4.3 | | | 1.6 | | 3.2 | 3.2 | 3.2 |
| | | PTG-2000 | | | 8 | | | | | |
| | | PTG-3000 | | 12.5 | | 1.6 | | 3.2 | 3.2 | 3.2 |
| | | PPG#3000 | | | | | | | | 1 |
| | | Polypropanediol-1000 | | | | 1.6 | 3.2 | | | |
| | | Polypropanediol-2400 | | | | 1.3 | 2.5 | | | |
| | Macropolyol content in polyol | | 57 | 79 | 71 | 65 | 64 | 65 | 66 | 69 |
| | Alkanepolyol (B2) (parts by mass) | 1,4-Butanediol | 2.55 | 2.55 | 2.55 | 2.55 | 2.55 | 3.4 | 2.55 | 2.55 |
| Polyol component (B) | | 1,3-Propanediol | 0.7 | 0.7 | 0.7 | 0.7 | 0.7 | | 0.7 | 0.7 |
| | | Ethylene glycol | | | | | | | | |
| | | 1,5-Pentanediol | | | | | | | | |
| | | 1,6-Hexanediol | | | | | | | | |
| | | 1,2-Propanediol | | | | | | | | |
| | | 1,3-Butanediol | | | | | | | | |
| | | Glycerine | | | | | | | | |
| | | TMP | | | | | | | | |
| | Mol concentration of 1,4-butanediol | | 75 | 75 | 75 | 75 | 75 | 100 | 75 | 75 |
| | Alkanepolyol content in polyol | | 43 | 21 | 29 | 35 | 36 | 35 | 34 | 31 |
| Metal catalyst (parts by mass) | Bismuth neodecanoate BiCAT 8108 | | 1.6 | 1.6 | 1.6 | 1.6 | 1.6 | 1.6 | 1.2 | 1.6 |
| | Bismuth octoate PUCAT 25 | | 0.8 | 0.8 | 0.8 | 0.8 | 0.8 | 0.8 | | 0.8 |
| | Zinc catalyst K-KAT XK-633 | | | | | | | | 1.2 | |
| Evaluation | Demoldability (min) | | 18 | 35 | 30 | 20 | 20 | 23 | 14 | 20 |
| | Appearance | | OK | OK | Some roughness | OK | OK | OK | OK | OK |
| | Apparent density (kg/m³) | | 246 | 243 | 245 | 248 | 248 | 253 | 250 | 240 |
| | Impact resilience (%) | | 64 | 67 | 59 | 67 | 65 | 62 | 66 | 60 |
| | Asker C hardness | | 41 | 40 | 39 | 40 | 40 | 42 | 40 | 38 |
| | Tensile strength(MPa) | | 1.2 | 1.1 | 0.9 | 1.1 | 1 | 1.1 | 1.2 | 0.7 |
| | Elongation at break(%) | | 360 | 310 | 270 | 320 | 320 | 330 | 340 | 240 |
| | Compression set (%) | | 18 | 12 | 16 | 18 | 10 | 17 | 8.7 | 22 |
| | Flex cracking (×10³ times) | | 200 or more | 110 | 100 | 200 or more | 200 or more | 160 | 200 or more | 3.5 |

While the illustrative embodiments of the present invention are provided in the above description, such is for illustrative purpose only and it is not to be construed as limiting in any manner. Modification and variation of the present invention that will be obvious to those skilled in the art is to be covered by the following claims.

### Industrial Applicability

The polyurethane elastomer foam material, polyurethane elastomer foam, and method for producing a polyurethane elastomer foam of the present invention are used as a material for an industrial product selected from the group consisting of sole member for shoes such as shoes inner sole, outer sole, and midsole (portion between inner sole and outer sole); shock absorbers including shock absorber for shoes, shock absorber for automobiles, shock absorber for helmets, and shock absorber for grip tape; interior materials for automobiles; sports goods including shoes, helmet, grip tape, and bat (batting restitution material); headphone member; packing member for civil engineering work; padding material including packing material, pillow, mattress, sheet cushion, sealing material, and soundproof flooring material; apparel products including brassiere, brassiere pad, brassiere cup, and shoulder pads; bicycles and mobility members; shock absorber for robot; cushioning material for caregiving products, and electric and electronic products. The polyurethane elastomer foam is preferably used in production of industrial products selected from the group consisting of shoes midsole, shock absorber, automobile interior material, and sports goods.

## Claims

1. A polyurethane elastomer foam material comprising:
a polyisocyanate component (A) and a polyol component (B),
wherein the polyisocyanate component (A) contains a prepolymer of 1,4-bis(isocyanatomethyl)cyclohexane (A1) and polyetherdiol (A2) having a straight chain oxyalkylene group with carbon atoms of 3 to 4 as a main chain, and
the polyol component (B) contains macropolyol (B1) containing 90 mass% or more of polyetherdiol having a straight chain oxyalkylene group with carbon atoms of 3 to 4 as a main chain, and
alkanepolyol (B2) having a straight chain or branched alkylene group with carbon atoms of 2 to 6.

2. The polyurethane elastomer foam material according to Claim 1, wherein
the macropolyol (B1) has a number average molecular weight of 400 or more and 10000 or less, and
the macropolyol (B1) contains a first polyetherdiol (B1-1) having a first number average molecular weight and a second polyetherdiol (B1-2) having a second number average molecular weight, the second number average molecular weight being different from the first number average molecular weight by 1000 or more.

3. The polyurethane elastomer foam material according to Claim 1, wherein
the polyol component (B) contains a plurality of types of the alkanepolyols (B2).

4. The polyurethane elastomer foam material according to Claim 3, wherein
the polyol component (B) contains the alkanepolyol (B2) having a straight chain.

5. The polyurethane elastomer foam material according to Claim 3,
wherein in a total amount of the plurality of types of alkanepolyols (B2), 45 mol% or more and 95 mol% or less of the alkanepolyol (B2) having carbon atoms of 4 is contained.

6. The polyurethane elastomer foam material according to Claim 3, wherein
the polyol component (B) contains the alkanepolyol (B2) having carbon atoms of 3.

7. A polyurethane elastomer foam,
being a foam of the polyurethane elastomer foam material according to Claim 1.

8. The polyurethane elastomer foam according to Claim 7,
being a material for a midsole of shoes.

9. A method for producing a polyurethane elastomer foam for producing the polyurethane elastomer foam according to Claim 7, the method including the steps of:
a preparation step, in which the polyurethane elastomer foam material according to Claim 1 is prepared, and
a foaming step, in which the polyurethane elastomer foam material is foamed.

10. The method for producing polyurethane elastomer foam according to Claim 9, wherein
in the foaming step, the polyurethane elastomer foam material is foamed in the presence of a metal catalyst containing bismuth and a metal catalyst containing zinc.
